Europäisches Patentamt

European Patent Office

Office européen des brevets

(19)

(11) Publication number: **0 149 856 B1**

(12) **EUROPEAN PATENT SPECIFICATION**

(45) Date of publication of patent specification: **02.10.91** (51) Int. Cl.⁵: **A47J 37/12**

(21) Application number: **84200070.5**

(22) Date of filing: **21.01.84**

(54) **Electrical cooking appliance including an open-work basket with handle.**

(43) Date of publication of application:
**31.07.85 Bulletin 85/31**

(45) Publication of the grant of the patent:
**02.10.91 Bulletin 91/40**

(84) Designated Contracting States:
**CH DE FR GB IT LI NL**

(56) References cited:
**EP-A- 0 008 838**   **DE-A- 3 221 433**
**FR-A- 2 506 040**   **GB-A- 2 115 260**
**US-A- 3 187 664**   **US-A- 3 242 849**
**US-A- 3 463 077**   **US-A- 3 908 531**
**US-A- 3 975 997**

(73) Proprietor: **NOVA ELECTRO INTERNATIONAL N.V.**
**Overhaamlaan 44**
**B-3700 Tongeren(BE)**

(72) Inventor: **D'Huys, René Nicolas Joseph**
**Neremstraat 227**
**B-3780 Tongeren(BE)**
Inventor: **Timmermans, Gilbert Lambert Joseph**
**Ginstraat 43**
**B-3700 Tongeren Herenelderen(BE)**

(74) Representative: **Vanderperre, Robert et al**
**Bureau Vander Haeghen S.A. Rue Colonel Bourg 108 A**
**B-1040 Bruxelles(BE)**

Rank Xerox (UK) Business Services

## Description

The invention relates to an electrical cooking appliance including a cooking vessel having an upper rim and an open work basket with handle, said basket being able to be manipulated so as to raise and lower it in the cooking vessel, this occuring with the help of a link which can slide through an opening in a bracket slidably mounted in a recess in the upper rim of the cooking vessel, said handle being pivotally associated with the link, the sliding movement of the link being converted into a pivoting movement of at least one connecting rod, one end thereof being pivotally mounted on the bracket the other end thereof being pivotally connected to the basket.

Electrical cooking appliances in which a motor is coupled to the basket in order to raise and lower it with respect to the appliance vessel are generally known, particularly deep fat fryers such as that disclosed in the US patent No 3 975 997 in which a gear motor is coupled to a tray containing the open-mesh food basket, both the tray and the basket being rocked upwardly out of the deep frying vessel by operation of the motor. Such a deep fryer is of a type used in restaurants, particularly for fast food and is not of the domestic type which is usually provided with a lid, such as disclosed for instances in the European patent application published under No 0008838 and which discloses the features of the preamble of claim 1. The latter cooking appliance discloses a handle with displaceable locking means preventing, when they are operated, relative movements between the basket and the handle so that the latter can be used to manipulate the basket outside the cooking vessel. But when these locking means on the handle are not operated, the latter is able to pivot with respect to the basket so that movements of the unlatched handle can displace the basket inside the cooking vessel and with its lid remaining closed. In a first position corresponding also to the latched one for taking the basket outside the vessel, the handle extends horizontally and the basket is raised in its upper position so that it can remain above the frying oil. With the handle unlatched and lowered to a vertical position alongside the appliance however, the basket may be fully immersed into the frying oil. Such a mechanism as well as the use of an elongated handle also readily permit the basket to be shaken between the two extreme positions this being desirable for some frying operations.

DE-A-3 221 433 discloses an electrical cooking appliance including an open basket with handle, a cooking vessel and a motor coupled to the basket in order to raise or lower it with respect to the cooking vessel. The motor acts on the handle via a coupling mechanism. With such an appliance, it is not possible

- to maintain the basket outside an oil-bath in the cooking vessel without action of the coupling mechanism on the handle, and
- to raise or to lower the basket in the cooking vessel with the lid closed.

The electrical cooking appliance according to the invention, which is of the type described in the first paragraph of this specification is characterized in that it comprises a motor and a coupling mechanism connecting the motor to the link, said coupling mechanism including a lever acting on said link for sliding it through said opening in and out of the cooking vessel so as to displace the basket in the cooking vessel.

Another general object of the invention is to realize such an electrical cooking appliance with a motor enabling the automatic displacement of the cooking vessel but allowing also manual operation. Indeed, with such a motor, electronic controls may be introduced together with automatic timing means whereby lowering of the basket as well as its subsequent removal from the frying bath may be programmed with the deep fryer being eventually left attended.

Nevertheless, it would be desirable for the operator to be able to intervene at any time, e.g. to manually remove the basket from the frying oil.

Such a combined automatic and manual operation is already knwon, for instance from the US patent No 3 908 531 but this automatic deep fryer is again of the general type disclosed in the first mentioned patent so that the basket is again lefted fully out the frying vessel and pivoted in a partially-inverted dumping position.

In the French patent application published under No 2 506 040, a motor is also associated to the basket in order to be able to lift it outside the vat when a microprocessor controlling the frying operation indicates that this is completed. However, this deep fryer is again of the same general type as those of the preceding US patents and no means are shown whereby the basket may in this manner be raised and lowered from the frying oil while remaining inside a closed cooking vessel and still allowing manual operation.

In accordance with another characteristic of the invention, the coupling mechanism connected to the motor acts on the handle which is connected to a bracket able to be temporarily associated to the cooking vessel, displaceable locking means preventing, when they are operated, relative displacements between the basket, the handle and the bracket but, when they are not operated, enabling movements of the handle to displace the basket inside the vessel.

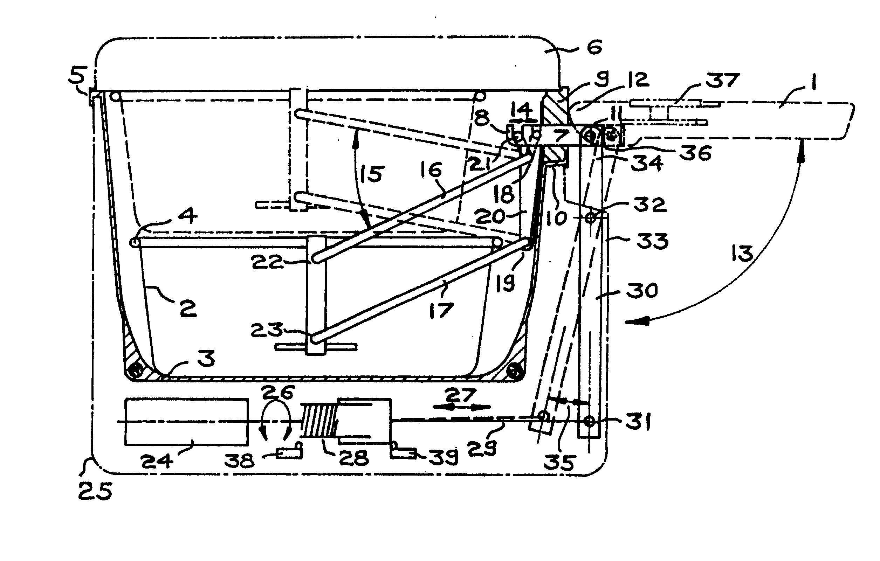

Accordingly, instead of the motor acting on a pinion and rack arrangement to raise and lower the basket and as schematically represented on Fig. 2A of the above mentioned French application, such a rack and segmental pinion combination operated manually by a control knob being already disclosed in the US patent No 3 463 077 concerning a domestic deep fryer, the present combination fully retains the mechanism of the above published European patent application but combines it with automatic motor controlled lifting means for the basket.

A detailed embodiment of the invention will now be described in relation with the drawing accompanying the description and representing a schematic sectional view of the deep fryer in accordance with the invention wherein the elongated handle shown in the horizontal position may be automatically operated by an electric motor or seized manually .

The domestic deep fryer shown schematically is that disclosed in the European patent application published under No 0008838 and previously referred to. More specifically, the figure generally corresponds to Fig. 9 of that application whose Figs. 7 and 8 show the schematically represented handle 1 in greater detail, its Figs. 10 and 11 representing the way in which it can be manipulated to raise and lower the open-work basket 2 shown in full line at the bottom of the deep fryer vat 3 and in interrupted lines in its upper position where its upper rim 4 is generally at the level of the upper rim 5 of the vat just under the lid 6 of the appliance. The handle 1 is shown in interrupted lines in its horizontal position since the latter corresponds to the basket 2 being raised. As described in the published European application, this occurs with the help of the link element 7 which in a horizontal plane (not shown) has a U-shape so that its two legs such as 8 can slide through corresponding openings in a bracket 9 slidably mounted in a recess 10 in the upper rim 5 of the vat. The handle 1 is pivotally associated in 11 with the link element 7. Due to the shown nose shaped end 12 of the handle, when the latter is pivoted from its vertical position (not shown) to its horizontal position (arrow 13) the nose shaped end 12 will rotate along the outside surface of the bracket 9 and in so doing will pull the U-shaped link element 7 towards the outside of the vat (arrow 14).

Then, the two legs such as 8 of the connecting link element 7 are no longer in their full line position advanced towards the inside of the vat but more to the right in the drawing and this corresponds to the raised position of the basket 2 (arrow 15). This displacement of the basket is obtained with the help of the upper and lower connecting rods 16 and 17 which in a horizontal plane have a semi-circular shape (not shown) and are each pivoted in their central part inside slots 18 and 19 respectively provided in an extension 20 of the bracket 9 and integral therewith. In its central part, the upper connecting rod 16 has moreover a bow shaped extension 21 which is engaged into corresponding slots provided in the end parts of the U-shaped legs such as 8 of the connecting link 7. Thus, upon the handle 1 being raised to the horizontal position shown, the U-shaped connecting link 7 drawn towards the right through bracket 9 will pull the central bow shaped part 21 of the upper connecting rod 16 which will therefore pivot around 18 and in so doing lift the basket 2 to which it is pivotally connected at 22, the lower connecting rod 17 being likewise pivoted on the basket 2 in 23.

By providing an electrical motor 24 inside the outer cover 25 of the deep fryer and underneath the vat 3, it is also possible to operate the U-shaped connecting link 7 and thereby automatically raise or lower the basket 2. As schematically indicated by the arrow 26, the motor is able to rotate in either one or the other direction and in so doing drive longitudinally in one or the other direction (arrow 27) an endless screw arrangement 28. In its outer right position, the latter is linked by 29 to a lever 30 shown in full lines in a vertical position. A pivot 31 associates link 29 with lever 30 which is pivoted at 32 on an outside pillar 33 integral with the housing 25 and suitably recessed in order to be able to house both the lever 30 and the handle 1 when the latter is in its dropped vertical position (not shown).

Above its horizontal pivot 32, the fee upper end 34 of the straight lever 30 cooperates with the U-shaped horizontal connecting link 7 in such a way as to pull the latter towards the right outside the vat upon motor 24 drawing the connecting link 29 towards the left so that the lever takes the oblique position shown in interrupted lines (arrow 35). Thus, in this position, the basket 2 will have been raised and the handle 1 will also be in the horizontal position to indicate the action accomplished by the motor 24. This can occur for instance by the upper end 34 of lever 30 abutting against the central part 36 of the U-shaped connecting link member 7. This upper end 34 should be suitably shaped, e.g. forked or slotted (not shown), to avoid any interference with the horizontal pivot 11 coupling the handle 1 to the link 7. Alternatively (not shown), the upper end 34 may also abut against this pin 11 instead of with the central part 36 of the link.

Rotation of the motor 24 in the opposite direction will return lever 30 to the vertical position and lower the basket 2 which, as in the published European patent application, will by its weight return the handle 1 to the vertical position (not shown) alongside the outer part 25 of the appliance. Both the handle 1 and the lever 30 may be suitably shaped to avoid interference and automatic displacement of the basket or manual handling are completely independent with the ability to latch the handle 1 into the shown horizontal position and in such a way that it may no longer rotate around pin 11 . This is obtained by the latching mechanism 37 described in detail in the published European patent application. Thus, once latched in this way, the handle 1 may be used to lift the basket 2 out of the appliance, the bracket 9 sliding out of the slot 10 in the rim 5 of the vat 3. Since the upper end of lever 30 merely cooperates with the connecting link 7 by abutment, lifting the basket in this way and replacing it in the vat does not necessitate any other action, correct repositioning of the bracket 9 automatically ensuring that the upper end 34 of the lever 30 will be suitably positioned inside the U-shaped link 7 thereby enabling the motor 24 to control further desired movements.

However, upon the handle 1 being latched in the shown horizontal position by means of mechanism 37, operation of the motor 24 will be without effect, the upper end 34 of the lever 30 being free to travel inside the U-shaped link 11. Thus, overriding priority is given to manual control always ensuring that the basket 2 can remain in the upper position outside the frying oil.

Electronic controls (not shown) associated with the automatic operation by the motor 24 can also be associated to limiting contact switches schematically indicated by 38 and 39. These cooperate with the endless screw arrangement 28 to limit the movements thereof between two predetermined positions.

Various modifications and variants with respect to those shown in the preferred embodiment of the invention are of course possible. For instance, the motor 24 may be linked to the sliding link 7 by other means. In particular, the endless screw mechanism 28 could be replaced by a linkage or cam arrangement producing the appropriate movement for the lever 30.

## Claims

1. Electrical cooking appliance including a cooking vessel (3) having an upper rim (5) and an openwork basket (2) with handle (1), said basket being able to be manipulated so as to raise or lower it in the cooking vessel (3), this occuring with the help of a link (7) which can slide through an opening in a bracket (9) slidably mounted in a recess (10) in the upper rim of the cooking vessel (3), said handle (1) being pivotally associated with the link (7), the sliding movement of the link (7) being converted into a pivoting movement of at least one connecting rod (16,17), one end thereof being pivotally mounted on the bracket (9), the other end thereof being pivotally connected to the basket (2), characterized in that it comprises a motor (24) and a coupling mechanism (28,29,30) connecting the motor (24) to the link (7), said coupling mechanism including a lever (30) acting on said link (7) for sliding it through said opening in and out of the cooking vessel (3) so as to displace the basket (2) in the cooking vessel.

2. Electrical cooking appliance according to claim 1, characterized in that the coupling mechanism includes an endless screw arrangement (28) transforming the rotation of the motor (24) in one or the other direction into a linear displacement.

3. Electrical cooking appliance according to anyone of the preceding claims, characterized in that the handle (1) includes displaceable locking means (37) preventing, when they are operated, relative displacements between the basket (2), the handle (1) and the bracket (9) but, when they are not operated, enabling movements of the handle to displace the basket in and out of the cooking vessel (3), the automatic operation under the control of the motor (24) being ineffective as long as the locking means are operated.

4. Electrical cooking appliance according to anyone of the preceding claims, characterized in that the movable link member (7) is U-shaped with both legs (8) of the U able to slide in and out of the cooking vessel (3), a free end (34) of the pivoted lever (30) moving inside the U-shaped link member so as to displace the latter at least in one direction by pushing thereon.

5. Electrical cooking appliance according to anyone of the preceding claims, characterized in that the pivoted lever (30) occupies a substantially vertical position on the side of the appliance and next to the handle (1) when the latter is released to its vertical position.

## Revendications

1. Appareil de cuisson électrique comprenant une cuve de cuisson (3) présentant un rebord supérieur (5) et un panier ajouré (2) avec poignée, ledit panier étant capable d'être manipulé de manière à le soulever ou l'abaisser dans la cuve de cuisson (3), ceci se produisant au moyen d'un élément de liaison (7) qui peut coulisser à travers une ouverture d'un support (9) monté par glissement dans une encoche (10) du bord supérieur de la cuve de cuisson (3), ladite poignée (1) étant associée par pivotement avec l'élément de liaison (7), le mouvement de coulissement de l'élément de liaison (7) étant converti en un mouvement de pivotement d'au moins une bielle de connexion (16,17) dont une extrémité est montée à pivotement sur le support (9) et dont l'autre extrémité est reliée à pivotement au panier (2), caractérisé en ce qu'il comprend un moteur (24) et un mécanisme d'accouplement (28, 29, 30) reliant le moteur (24) à l'élément de liaison (7), ledit mécanisme d'accouplement comprenant un levier (30) agissant sur l'élément de liaison (7) pour coulisser celui-ci à travers ladite ouverture dans ou hors de la cuve de cuisson (3), de manière a déplacer le panier (2) dans la cuve de cuisson.

2. Appareil de cuisson électrique suivant la revendication 1, caractérisé en ce que le mécanisme d'accouplement comprend un arrangement à vis sans fin (28) transformant la rotation du moteur (24) dans l'un ou l'autre sens en un mouvement linéaire.

3. Appareil de cuisson électrique suivant l'une quelconque des revendications précédentes, caractérisé en ce que le manche (1) comprend des moyens de verrouillage (37) empêchant lorsqu'ils sont actionnés, des mouvements relatifs entre le panier (2), la poignée (1) et le support (9), mais permettant, lorsqu'ils ne sont pas actionnés, des mouvements de la poignée pour déplacer le panier dans ou hors de la cuve de cuisson (3) , l'opération automatique commandée par le moteur (24) étant ineffective aussi longtemps que les moyens de verrouillage sont actionnés.

4. Appareil de cuisson électrique suivant l'une quelconque des revendications précédentes, caractérisé en ce que l'élément de liaison mobile est en forme de U, avec les deux branches (8,9) du U capables de glisser dans ou hors de la cuve de cuisson (3), une extrémité libre (34) du levier pivotant (30) se déplaçant dans l'élément de liaison en forme de U de manière à déplacer ce dernier au moins dans une direction en poussant sur celui-ci.

5. Appareil de cuisson électrique suivant l'une quelconque des revendications précédentes, caractérisé en ce que le levier pivotant (30) occupe une position sensiblement verticale sur le côté de l'appareil et adjacente à la poignée (1) lorsque cette dernière est dans sa position verticale.

**Patentansprüche**

1. Elektrische Kochvorrichtung, die ein Kochgefäß (3) mit einem oberen Rand (5) und einen durchbrochenen Korb (2) mit einem Griffstück (1) aufweist, wobei der Korb von Hand in dem Kochgefäß (3) hochgehoben oder abgesenkt werden kann, wobei dies mit Hilfe eines Verbindungsgliedes (7) zustande kommt, das durch eine Öffnung in einem verschieblich in einer Ausnehmung (10) in dem oberen Rand des Kochgefäßes (3) befestigten Träger (9) gleiten kann, wobei das Griffstück (1) schwenkbar mit dem Verbindungsglied (7) verbunden ist, die Gleitbewegung des Verbindungsgliedes (7) in eine Schwenkbewegung von mindestens einem Verbindungsstab (16, 17) umgesetzt wird, dessen eines Ende schwenkbar an dem Träger (9) befestigt und dessen anderes Ende schwenkbar mit dem Korb (2) verbunden ist, dadurch gekennzeichnet, daß sie einen Motor (24) und einen den Motor (24) mit dem Verbindungsglied (7) koppelnden Kopplungsmechanismus (28, 29, 30) umfaßt, wobei der Kopplungsmechanismus einen Hebel (30) aufweist, der auf das Verbindungsstück (7) einwirkt, um es durch die Öffnung in das Kochgefäß (3) hinein und aus ihm heraus gleiten zu lassen, um damit den Korb (2) in dem Kochgefäß zu verstellen.

2. Elektrische Kochvorrichtung nach Anspruch 1, dadurch gekennzeichnet, daß der Kopplungsmechanismus eine Anordnung (28) mit einer Schneckenanordnung aufweist, die die Drehbewegung des Motors (24) in einer oder in der anderen Richtung in eine Längsverschiebungsbewegung umwandelt.

3. Elektrische Kochvorrichtung nach einem der vorstehenden Ansprüche, dadurch gekennzeichnet, daS das Griffstück (1) eine verschiebliche Arretiereinrichtungen (37) aufweist, die, wenn sie betätigt ist, relative Verschiebungen zwischen dem Korb (2), dem Griffstück (1) und dem Träger (9) verhindert, die jedoch, wenn sie nicht betätigt ist, Bewegungen des Griffstückes ermöglichen, um den Korb in das Kochgefäß (3) hinein und aus ihm heraus zu bewegen, wobei der Automatikbetrieb unter der Steuerung des Motors (24) solange unwirksam ist, wie die Arretiereinrichtung betätigt ist.

4. Elektrische Kochvorrichtung nach einem der vorstehenden Ansprüche, dadurch gekennzeichnet, daß das bewegbare Verbindungselement (7) U-Form aufweist, wobei beide Schenkel (8) des U in das Kochgefäß (3) hinein und aus ihm heraus gleiten können, wobei ein freies Ende (34) des Schwenkhebels (30) sich in dem U-förmigen Verbindungselement bewegt, um so das letztere in mindestens einer Richtung zu verschieben, indem es darauf drückt.

5. Elektrische Kochvorrichtung nach einem der vorstehenden Ansprüche, durch gekennzeichnet, daß der Schwenkhebel (30) eine praktisch senkrechte Stellung an der Seite der Vorrichtung und dem Griffstück (1) benachbart einnimmt, wenn das letztere in seine senkrechte Stellung freigelassen ist.

EP 0 149 856 B1